# EUROPÄISCHE PATENTSCHRIFT

(11) **EP 4 277 828 B1**
(45) Veröffentlichungstag und Bekanntmachung des Hinweises auf die Patenterteilung: **22.10.2025**
(21) Anmeldenummer: 22702151.6
(22) Anmeldetag: 12.01.2022
(51) Int. Cl.: B62B 3/00, B62B 5/00

(54) **SCHUTZSYSTEM ZUM SCHUTZ VON TRANSPORTGUT**
PROTECTION SYSTEM FOR PROTECTING GOODS TO BE TRANSPORTED
SYSTÈME DE PROTECTION POUR PROTÉGER DES ARTICLES À TRANSPORTER

(30) Priorität: 15.01.2021 DE 102021100734
(43) Veröffentlichungstag der Anmeldung: 22.11.2023
(73) Patentinhaber: Kupek GmbH, 96277 Schneckenlohe (DE)
(72) Erfinder: KERBSTIES, Udo, 97828 Marktheidenfeld (DE)
(74) Vertreter: advotec.
(86) Internationale Anmeldenummer: PCT/EP2022/050497
(87) Internationale Veröffentlichungsnummer: WO 2022/152725

(56) Entgegenhaltungen:
- EP-A1- 2 905 197
- EP-A1- 3 342 674
- AT-U1- 11 917
- DE-T2- 60 316 242

## Beschreibung

Die Erfindung betrifft ein Schutzsystem und Rollbehälter zum Schutz von Transportgut nach dem Oberbegriff des Anspruchs 1.

Aus dem Stand der Technik sind mehrere Schutzsysteme zum Schutz von Transportgut auf Rollbehältern bekannt. Dabei spielt die Vermeidung des Herabfallens von Waren beim Transport eine große Rolle. Zusätzlich soll das Schutzsystem das Transportgut vor Witterung, anderen Verschmutzungen und Diebstahl schützen.

Am weitesten verbreitet ist das Umwickeln des Rollbehälters nach dem Beladen mit Adhäsionsfolie. Die Folie verhindert dabei effektiv das Herunterfallen, indem sie das Transportgut mit den seitlich angebrachten Seitengittern des Rollbehälters verbindet. Außerdem werden Gelegenheitsdiebstähle durch Passanten verhindert, da die Ware für den einfachen Zugriff unzugänglich bleibt. Nachteilhaft ist jedoch, dass das Anbringen der Adhäsionsfolie zeitaufwendig ist und von einer Person oder maschinell ausgeführt werden muss. Darüber hinaus ist es zur Entnahme der Ware notwendig, die Folie zu zerschneiden. Dadurch ist eine Wiederverwendung nicht möglich und es entsteht nach jedem Transport eine große Menge an Abfall.

Eine Alternative zur Folie ist die Installation eines Schutzsystems in Form eines Gitters oder eines Netzes. Beide Formen des Schutzsystems haben jedoch den Nachteil, dass sie nur ausreichend große Transportgüter vor dem Herabfallen und Diebstahl schützen. Außerdem wird das Transportgut bei Einsatz eines Netzes oder eines Gitters der Witterung und anderen Verschmutzungen schutzlos ausgesetzt. Weiterhin haben das Gitter und das Netz den Nachteil, dass sie verglichen mit der Adhäsionsfolie ein hohes Gewicht aufweisen und unhandlich sind. Dadurch werden Rücktransport und Lagerung der Schutzsysteme zusammen mit dem Rollbehälter erschwert.

Außerdem ist noch ein Schutzsystem bekannt, welches aus einem Plastikgewebe oder einer festen Folie hergestellt ist. Das Schutzsystem hat im Wesentlichen die Form des Transportbehälters und wird zur Montage über den Rollbehälter gestülpt, wozu in der Regel zwei Personen benötigt werden. Die Montage ist insbesondere bei schlecht platziertem und/oder sperrigem Transportgut sehr aufwendig oder unmöglich. Zwar bietet dieses Schutzsystem Abschirmung gegen Witterung, verhindert aber nicht das Herabfallen des Transportgutes. Insbesondere kleine Transportgüter drücken beim Herabfallen das Schutzsystem zur Seite und rutschen durch den Schlitz zwischen Wandung und Rollbehälter.

Zuletzt fand die Verwendung von Brettern oder Platten aus wiederverwendbarem Kunststoff weitere Verbreitung. Diese werden mithilfe von Zugbändern an den Gittern der Rollbehälter befestigt. Zwar sind diese leichter als beispielsweise Gitter, jedoch haben sie auch einen hohen Platzverbrauch. Dadurch erschweren sie gleichfalls den Rücktransport und die Lagerung der Rollbehälter. Darüber hinaus bieten sie nur bedingt Schutz vor Witterung. Auch ist ihre Montage am Rollbehälter aufwendig.

Weitere Schutzsysteme für Rollbehälter sind in der DE 603 16 242 T2, in der EP 3 342 674 A1, in der AT 11 917 U1 und in der EP 2 905 197 A1 offenbart.

Es besteht daher ein großer Bedarf an einem wiederverwendbaren, günstigen, leichten, das Transportgut vor Herausfallen, Diebstahl und/oder Witterung schützenden, einfach, leicht und schnell montierbaren und den Eingriff für Berechtigte ermöglichenden Schutzsystem für ein auf einem Rollbehälter transportiertes Transportgut. Zudem sollte das Schutzsystem kostengünstig herstellbar, langlebig, sowie individuell und anforderungsgemäß an die Größe, die Menge, die bevorzugte und entsprechende Umverpackung des Transportgutes anpassbar sein, wobei ein weiteres Augenmerk darauf liegt, das Schutzsystem möglichst kompakt und platzsparend verstauen zu können. Die Erfindung hat sich daher die Aufgabe gestellt, ein Schutzsystem bereitzustellen, um die oben genannten Schwierigkeiten zu überwinden.

Diese Aufgabe wird auf überraschend einfache, aber wirkungsvolle Weise von einem Schutzsystem und Rollbehälter nach der Lehre des unabhängigen Hauptanspruchs 1 gelöst.

Erfindungsgemäß wird ein Schutzsystem zum Schutz von Transportgut auf einem Rollbehälter vorgeschlagen, wobei das Schutzsystem mindestens eine Seitenwand und der Rollbehälter mindestens eine Seitenfläche umfasst, wobei die mindestens eine Seitenfläche mit der mindestens einen Seitenwand teilweise oder vollständig bedeckbar ist, und wobei das Schutzsystem mindestens ein Befestigungsmittel umfasst. Das Schutzsystem ist dadurch gekennzeichnet, dass das Schutzsystem über das mindestens eine Befestigungsmittel mit dem Rollbehälter lösbar oder unlösbar verbindbar ist und das Schutzsystem aus einem nachgiebigen Material ist.

Der Grundgedanke beruht darauf, das Schutzsystem für eine Wiederverwendung geeignet auszugestalten, dabei eine platzsparende Lagerung und einen einfachen Rücktransport bei Nichtgebrauch zu ermöglichen und dennoch das Transportgut optimal vor unberechtigtem Eingriff, Herausfallen, Diebstahl und/oder Witterung zu schützen.

Erfindungsgemäß weist das Schutzsystem für ein Transportgut auf einem Rollbehälter, welcher mindestens eine, bevorzugt zwei, drei oder vier, teilweise geschlossene Seitenflächen aufweist, mindestens eine, bevorzugt zwei, drei oder vier, Seitenwände auf. Der Begriff "Rollbehälter" betrifft eine Transportmöglichkeit von Transportgut, bei welcher in der Regel an jeder Ecke einer rechteckigen Bodenplatte ein Rad montiert ist. Es sind aber auch andere geometrische Formen der Bodenplatte denkbar. Auf der Bodenplatte wird Transportgut platziert. Durch die geometrische Form der Ausgestaltung der Bodenplatte entstehen entsprechende Seitenflächen, an denen Seitengitter angebracht seien können. Beispielsweise entstehen bei einer rechteckigen Bodenplatte vier Seitenflächen, von denen in der Regel an einer, zwei, drei oder allen vier Seitenflächen Seitengitter angebracht sind. Die Seitengitter geben dem aufgestapelten Transportgut die nötige Stabilität und ermöglichen das einfache Manövrieren des Rollbehälters mit der Hand. Bevorzugt sind zwei Seitengitter an gegenüberliegenden Seitenflächen angebracht. Im Rahmen der Erfindung ist dabei die Ausgestaltung der mindestens einen Seitenwand und/oder Seitenfläche von untergeordneter Bedeutung, so dass diese gleich oder unterschiedlich ausgestaltet sein können.

Weiterhin ist es erfindungsgemäß erkannt worden, dass die mindestens eine Seitenwand teilweise oder vollständig bedeckend für die mindestens eine Seitenfläche ist. Der Begriff "bedeckend" betrifft die Eignung eines Gegenstands, etwas zu bedecken bzw. eine Bedeckung für diesen zu bilden. Dabei ist es erkannt worden, dass es nur bei einer Bedeckung des Transportguts möglich ist, dieses vor unberechtigtem Eingriff, Herausfallen, Diebstahl und/oder Witterung zu schützen. Der Begriff "vollständig bedeckend" betrifft die Eignung eines Gegenstands zum lückenlosen Umhüllen eines anderen Gegenstands. Der Begriff "teilweise bedeckend" betrifft die Eignung eines Gegenstands zur Umhüllung eines lokal begrenzten, zusammenhängenden Teils eines anderen Gegenstands.

Im Rahmen der Erfindung ist erkannt worden, dass das Schutzsystem mindestens ein Befestigungsmittel umfasst und über das mindestens eine Befestigungsmittel mit einem Rollbehälter lösbar verbindbar ist. Durch eine lösbare Verbindbarkeit des Schutzsystems mit dem Rollbehälter kann die Montage und Demontage des Schutzsystems auf einfache und schnelle Weise durch eine einzige Person erfolgen. Der Begriff "lösbar oder unlösbar verbindbar" betrifft die Eignung eines Gegenstands, eine lösbare oder unlösbare Verbindung mit einem anderen Gegenstand einzugehen. Der Begriff "lösbare Verbindung" betrifft eine Verbindung, welche durch die Vornahme vorgegebener Handlungen ohne Zerstörung des Rollbehälters oder des Schutzsystems gelöst werden kann. Der Begriff "unlösbare Verbindung" betrifft eine Verbindung, die nur durch die vollständige oder teilweise Zerstörung des Rollbehälters oder des Schutzsystems gelöst werden kann. Eine solche lösbare oder unlösbare Verbindung wird über ein beliebiges, dem Fachmann bekanntes Befestigungsmittel ermöglicht.

Weiterhin ist es als erfindungswesentlich erkannt worden, dass das Schutzsystem aus einem nachgiebigen Material ist. Der Begriff "nachgiebig" betrifft dabei ein beliebiges Material, welches sich aufgrund des Einwirkens einer Kraft oder eines Moments ohne Schäden und gemäß den anforderungsgemäßen Bedingungen biegen, ziehen, stauchen und/oder verformen lässt. Durch den Einsatz von nachgiebigen Materialien ist das Schutzsystem selbst optimal an den Rollbehälter und/oder das Transportgut anpassbar. Dabei ist grundsätzlich ein beliebiges Transportgut denkbar. Nachgiebige Materialien bieten dabei den Vorteil, dass diese leichter und dünner als steife Materialien ausgeführt werden können. Einem Fachmann ist außerdem bekannt, dass nachgiebige Materialien unempfindlich gegen Stöße und Spannungen sind, während steife Materialien bei übermäßiger Belastung irreversibel verformt werden und sogar brechen. Außerdem ist es bei der Verwendung eines nachgiebigen Materials möglich, das Schutzsystem bei Nichtverwendung durch Falten, Knicken, Rollen, Knüllen und/oder Raffen auf ein kompaktes Packungsmaß zu bringen. Dies vereinfacht den Rücktransport des Schutzsystems sowie die Lagerung bei Nichtgebrauch. Außerdem ist es erkannt worden, dass das Herabfallen des Transportgutes ebenfalls durch ein aus einem nachgiebigen Material hergestelltes Schutzsystem verhindert wird, wenn dieses ausreichend unter mechanischer Spannung steht. Die Aufbringung einer mechanischen Spannung auf das Schutzsystem wird durch die erfindungsgemäße Verbindung des Schutzsystems mit dem Rollbehälter ermöglicht. Es ist als erfindungswesentlich erkannt worden, dass durch die Integration des Seitengitters des Rollbehälters in das Schutzsystem diesem die nötige Stabilität gegeben wird, so dass es ermöglicht ist auf steife Materialien zu verzichten und auf nachgiebige Materialien zurückzugreifen.

Durch den Einsatz einer lösbaren Verbindung ist es also ermöglicht, das Schutzsystem bei Nichtgebrauch vom Rollbehälter zerstörungsfrei zu lösen, um dieses anschließend aufgrund der Verwendung eines nachgiebigen Materials auf ein kompaktes Packungsmaß zu bringen und dieses zusammen oder separat von diesem bis zum nächsten Einsatz zu lagern, während bei einer unlösbaren Verbindung das Schutzsystem am Rollbehälter durch das nachgiebige Material auf ein kompaktes Packungsmaß gebracht wird und mit dem Rollbehälter bei Nichtgebrauch zusammen gelagert wird. Ebenfalls kann durch die Aufbringung von Spannung, über die Verbindung des Schutzsystems mit dem Rollbehälter, in das nachgiebige Material das Transportgut optimal geschützt werden.

Mittels der Erfindung ist es möglich, ein Schutzsystem bereitzustellen, das auf einfache, schnelle und leichte Weise von einer Person allein montierbar ist und das Transportgut vor unberechtigtem Eingriff, Herausfallen, Diebstahl und/oder Witterung schützt. Dabei ist das Schutzsystem im montierten Zustand belastbar, langlebig, leicht, an den Rollbehälter und/oder das Transportgut anpassbar und platzsparend zusammenfaltbar, so dass dieses im Vergleich zu den aus dem Stand der Technik bekannten, wiederverwendbaren Schutzsystemen weniger Platz einnimmt und daher mehr Transportgut auf den Rollbehälter geladen werden kann. Auf diese Weise können in erheblichem Maße Transportkosten reduziert werden. Außerdem ist das Schutzsystem zur optimalen Lagerung bei Nichtverwendung leicht auf ein handliches und geringes Packungsmaß reduzierbar.

Vorteilhafte Weiterbildungen der Erfindung sind in den Unteransprüchen dargestellt.

In einer Weiterbildung der Erfindung ist es denkbar, dass ein weiteres Befestigungsmittel, bevorzugt ein flächiges und/oder punktuelles Befestigungsmittel, ein Klettverschluss, ein Band, ein Magnet, ein Formschlussteil, eine Schnalle, ein Knopf, wie ein Druckknopf, ein Reißverschluss, eine Reibschweißnaht, eine Klebenaht und/oder eine Niete ist. Bevorzugt umfasst das Schutzsystem zwei, drei, vier, fünf, sechs, sieben, acht, neun, zehn, elf, zwölf, dreizehn, vierzehn, fünfzehn, sechzehn, siebzehn, achtzehn, neunzehn, zwanzig oder mehr unterschiedlich oder gleich ausgestaltete Befestigungsmittel. Dem Fachmann ist bekannt, dass die Zugkraft, welche ein flächiges Befestigungsmittel, wie beispielsweise, jedoch keineswegs ausschließlich, ein Klettverschluss oder ein Magnet, ohne ungewolltes Öffnen aufnehmen kann, direkt von dem Ausmaß der Fläche des Befestigungsmittels abhängt. Dabei ist eine möglichst große Fläche vorteilhaft. Dem Fachmann ist weiterhin bekannt, dass ein punktuelles Befestigungsmittel, wie beispielsweise, jedoch keineswegs ausschließlich, ein Knopf oder eine Schnalle, durch geeignete Ausgestaltung und/oder Platzierung eine formschlüssige Verbindung ausbildet. Daher ist das ungewollte Öffnen von punktuellen Befestigungsmitteln bei sachgemäßem Gebrauch nicht möglich.

Dabei ist der Einsatz der weiteren Befestigungsmittel nicht auf die lösbare oder unlösbare Verbindung des Schutzsystems mit dem Rollbehälter begrenzt, wobei erfindungsgemäß mindestens ein Befestigungsmittel die lösbare oder unlösbare Verbindung des Schutzsystems mit dem Rollbehälter ermöglicht. Andere denkbare Einsatzmöglichkeiten eines Befestigungsmittels sind die lösbare Verbindung mit einem oder mehreren anderen identisch oder unterschiedlich ausgestalteten Schutzsystemen und/oder mit einem anderen Bereich des Schutzsystems, um einen größeren Anteil des Transportgutes zu schützen und/oder einen verbesserten Schutz des Transportguts herbeizuführen. Dabei soll insbesondere eine höhere Spannung und/oder eine höhere Dichtigkeit herbeigeführt werden. Eine weitere denkbare Einsatzmöglichkeit ist die Erhaltung eines teilweise oder vollständigen gefalteten, geknickten, gerollten, geknüllten und/oder gerafften Zustands des Schutzsystems und/oder die lösbare Verbindung des Schutzsystems am Rollbehälter im zuvor aufgeführten Zustand. Dies erleichtert den Transport und/oder die Lagerung des Schutzsystems bei Nichtverwendung. Dabei weist der andere Teil und/oder der andere Bereich des Schutzsystems bevorzugt ein mit dem Befestigungsmittel verbindbares Befestigungsmittel-Gegenstück aus. Beispiel für ein Befestigungsmittel mit Befestigungsmittel-Gegenstück ist ein Klettverschluss, welcher als ein Widerhakenband oder als mit diesem kompatibles Schlaufenband ausgebildet werden kann. Außerdem ist es ebenfalls denkbar, dass ein Befestigungsmittel eine oder mehrere Einsatzmöglichkeiten übernimmt. Im Rahmen der Erfindung ist erkannt worden, dass die Ausbildung des Befestigungsmittels im Grunde beliebig ist, einige Befestigungsmittel aber besonders bevorzugt werden. Bevorzugt ist ein Klettverschluss, da dieser auf leichte und bekannte Weise in der Regel einhändig montiert werden kann. Gleichzeitig ist es möglich, je nachdem ob das Schutzsystem am Rollbehälter montiert oder für die Lagerung demontiert zusammengelegt ist, einem Klettverschlusselement mehrere Einsatzmöglichkeiten zuzumessen. Vorteilhaft ist ein Magnet, da dieser an den Seitengittern des Rollbehälters angehaftet werden kann. Es ist erkannt worden, dass die Seitengitter der Rollbehälter meist aus einem magnetischen Material, etwa Eisen, gefertigt sind. Mithilfe eines Magnets ist auf diese Weise eine schnelle Anhaftung des Schutzsystems an dem Rollbehälter mittels der durch das magnetische Feld verursachten magnetischen Anziehungskraft zwischen Magnet und Seitengitter garantiert. Weiter bevorzugt ist ein Formschlussteil, insbesondere ein Formschlussteil, welches formschlüssig über die obere Kante des Seitengitters des Rollbehälters gezogen wird. Besonders bevorzugt ist ein Formschlussteil, welches über die obere Kante des Seitengitters gezogen wird. Noch mehr bevorzugt ist als Befestigungsmittel eine Schnalle, da diese ebenfalls mit mehreren unterschiedlichen Gegenstücken verbindbar ist. Eine Schnalle ist dabei widerstandsfähig gegenüber Zugkraft. Bevorzugt ist die Schnalle eine Klickschnalle oder eine Verstellschnalle. Eine weitere denkbare Ausführung ist ein Reißverschluss, da dieser eine Verbindung, insbesondere eine witterungsbeständige Verbindung, über eine längere Strecke hinweg ermöglicht. Besonders bevorzugt wird ein unlösbares Befestigungsmittel dazu eingesetzt, das Schutzsystem unlösbar mit dem Rollbehälter zu verbinden. Dadurch ist das Schutzsystem jederzeit greifbar. Weiter bevorzugt ist das Befestigungsmittel eine Reibschweißnaht, und/oder eine Klebenaht, da diese witterungsbeständig ausführbar sind.

In einer bevorzugten Weiterbildung ist es denkbar, dass die Seitenwand eine Außenseite, eine Innenseite, eine obere Kante, eine untere Kante und/oder mindestens eine seitliche Kante umfasst und das weitere Befestigungsmittel im Bereich der Außenseite, der Innenseite, der oberen Kante, der unteren Kante und/oder der mindestens einen seitlichen Kante angeordnet ist. Zudem ist es denkbar, dass das weitere Befestigungsmittel seitlich und/oder mittig der oberen Kante, der unteren Kante und/oder der mindestens einen seitlichen Kante angeordnet ist, sowie in jedem denkbaren Bereich dazwischen. Bevorzugt befinden sich ein, weiter bevorzugt zwei, drei, vier, fünf, sechs, sieben, acht, neun, zehn oder mehr, Befestigungsmittel in regelmäßigen oder unregelmäßigen Abständen an der oberen Kante, der unteren Kante und/oder an mindestens einer seitlichen Kante. Es ist ebenfalls denkbar, dass sich zwei, drei, vier, fünf, sechs, sieben, acht, neun, zehn oder mehr unterschiedlich und/oder identisch gestaltete Befestigungsmittel an derselben Stelle befinden. Im Rahmen der Erfindung ist erkannt worden, dass die Platzierung des Befestigungsmittels großen Einfluss auf die Praktikabilität, insbesondere im Hinblick auf die Montage und Demontage dieser, hat. Ist das Befestigungsmittel beispielsweise an der Innenseite der Seitenwand angeordnet, so ist es leicht mit der Seitenfläche des Rollbehälters verbindbar. Ein Befestigungsmittel an der Außenseite der Seitenwand ist besonders nützlich im Hinblick auf die Verbindung mit einem oder mehreren anderen identisch oder unterschiedlich ausgestalteten Schutzsystemen und/oder mit einem anderen Teil des Schutzsystems mit den oben angeführten Vorteilen. Ein Befestigungsmittel an der oberen Kante des Schutzsystems ermöglicht eine schnelle Montage des Schutzsystems am Rollbehälter. Befindet sich das Befestigungsmittel jedoch an der unteren Kante, so kann auf diese Weise die Seitenwand unter Spannung gesetzt werden, so dass die Seitenwand des Schutzsystems an der Seitenfläche des Rollbehälters anliegt und das Herausfallen des Transportguts verhindert. Befestigungsmittel an den Seitenkanten ermöglichen ebenfalls das Aufbringen von Spannung, geben dem Schutzsystem aber auch eine erhöhte Dichtigkeit und/oder ermöglichen den Verschluss des Schutzsystems. Mittig angebrachte Befestigungsmittel bringen die Seitenwand in einen engeren Kontakt mit der Seitenfläche und stabilisieren dadurch das Transportgut an seiner vorgesehenen Position. Außerdem können sie die Spannung der Seitenwände zusätzlich erhöhen und damit das Herabfallen des Transportguts verhindern.

Es ist weiterhin denkbar, dass das Schutzsystem zwei, drei oder vier Seitenwände umfasst, um auf diese Weise alle Seitenflächen des Rollbehälters zu umschließen und das Transportgut optimal vor unberechtigtem Eingriff, Herausfallen, Diebstahl und/oder Witterung zu schützen.

In noch einer Weiterbildung ist es denkbar, dass das Schutzsystem ein Dach umfasst. Um das Transportgut optimal vor unberechtigtem Eingriff, Herausfallen, Diebstahl und/oder Witterung zu schützen, insbesondere vor Schneefall oder Regen, ist eine Bedeckung der Oberseite des Rollbehälters zweckmäßig. Die Ausgestaltung des Dachs ist dabei beliebig, bevorzugt ist jedoch ein Überschlag. Dabei ist es denkbar, dass das Schutzsystem mindestens ein weiteres Befestigungsmittel umfasst, welches eine lösbare oder unlösbare Verbindung des Dachs mit einem anderen Teil des Schutzsystems ermöglicht. Geeignete Befestigungsmittel für eine lösbare oder unlösbare Verbindung sind einem Fachmann bekannt.

Darüber hinaus ist es denkbar, dass das Schutzsystem mindestens eine Lasche umfasst. Durch die von der Lasche verursachte und erfindungsgemäße Überlappung von zwei oder mehr Abschnitten ist es möglich, den Schutz gegen Witterung zu erhöhen und/oder das Schutzsystem bei Nichtverwendung zuverlässig und sicher in dem kompakten Packungsmaß zu halten. Bevorzugt ist auf der mindestens einen Lasche mindestens ein Befestigungsmittel, weiter bevorzugt ein flächiges Befestigungsmittel, wie beispielsweise ein Klettverschluss, angeordnet. Darüber hinaus ist es erkannt worden, dass mit Hilfe einer geeignet ausgestalteten Lasche es ermöglicht wird, sperriges und/oder schlecht platziertes Transportgut ebenfalls mit dem Schutzsystem zu schützen, da der Umfang des Schutzsystems bei Bedarf vergrößert werden kann. Der Begriff "Lasche" betrifft einen Abschnitt der Schutzabdeckung, welcher überlappend über einen anderen Abschnitt der gleichen, einer anderen und/oder eines anderen Teils der Schutzabdeckung gelegt wird.

Es ist weiterhin denkbar, dass das Schutzsystem einteilig oder mehrteilig ausgebildet ist. Ein einteiliges Schutzsystem bietet den Vorteil, dass stets alle Teile vorhanden sind. Ein mehrteiliges Schutzsystem hingegen kann die Montage deutlich vereinfachen. Zudem ist das Schutzsystem optimal an den Rollbehälter und/oder das Transportgut anpassbar.

In noch einer Weiterbildung ist es denkbar, dass mindestens eine Seitenwand teilweise oder vollständig öffenbar und verschließbar ist. Bevorzugt sind zwei, drei, mehr oder alle Seitenwände teilweise oder vollständig öffenbar und verschließbar. Ist eine Seitenwand teilweise oder vollständig öffenbar und verschließbar, so sind die Entnahme und die Platzierung von Transportgut im Rollbehälter auch nach der Montage des Schutzsystems am Rollbehälter möglich. Insbesondere wenn das Transportgut nicht denselben Ziel- oder Ausgangsort aufweist, beschleunigt dieses Vorgehen das Be- und Entladen des Transportguts. Dabei ist es ebenfalls denkbar, dass sich die Seitenwand an mehreren Stellen lokal begrenzt öffnen und schließen lässt, so dass ein Hineingreifen gezielt an der Stelle erfolgen kann, an der sich das herauszunehmende Transportgut befindet oder an der das einzugebende Transportgut platziert werden soll. Bevorzugt weist das Schutzsystem mindestens ein, an anderer Stelle ausführlich beschriebenes, Befestigungsmittel auf, welches durch eine lösbare Verbindung das Öffnen und Verschließen der Seitenwand ermöglicht.

Darüber hinaus ist es denkbar, dass das Schutzsystem eine Diebstahlsicherung umfasst. Im Rahmen der Erfindung ist erkannt worden, dass die bisherigen Systeme die Waren ebenfalls vor Diebstahl sichern sollen. Grundsätzlich sind mehrere Arten der Diebstahlsicherung denkbar. Beispielsweise ist es denkbar, dass das Schutzsystem mithilfe eines Schlosses mit dem Rollbehälter verbunden oder gegen unbefugtes Öffnen abgesichert ist. Zusätzlich ist es denkbar, dass eine alarmgebende elektrische Diebstahlsicherung installiert ist.

In noch einer Weiterbildung ist es denkbar, dass das Schutzsystem eine Codierung umfasst. Die Ausgestaltung der Codierung ist beliebig, bevorzugt ist eine Codierung per Chip, Nummer, Barcode, QR-Code und/oder Bezeichnung. Besonders bevorzugt ist eine Codierung mittels GPS-Tracker. Ein GPS-Tracker ermöglicht die Ortung des Schutzsystems und des mit dem Schutzsystem verbundenen Rollbehälters. Noch mehr bevorzugt ist eine Codierung mittels eines RFID-Chips. RFID-Chips können durch ein äußeres elektronisches System erfasst werden. Dies ist auch bei Abstand vom elektronischen System zum RFID-Chip möglich. Daher ist möglich, dass das Transportgut auf einem Rollbehälter platziert wird und eine zum Transportgut passende Bezeichnung im Zusammenhang mit dem RFID-Chip abgespeichert wird. Anschließend wird die Bezeichnung im Zusammenhang mit der auf dem RFID-Chip abgespeicherten Codierung an das Zielsystem elektronisch übermittelt. Wird nun der Rollbehälter zusammen mit dem Transportgut und dem Schutzsystem am Zielort ausgeliefert, registriert das elektronische System den RFID-Chip und bucht das Transportgut automatisch als vorhanden ein.

In noch einer Ausgestaltung der Erfindung ist es denkbar, dass das Schutzsystem mindestens einen, bevorzugt zwei, drei, vier, fünf, sechs oder mehr, Eingriffe umfasst. Bevorzugt ist der Eingriff im mittleren Bereich der Seitenwand, um das Be- und Entladen von Transportgut zu erleichtern. Noch mehr bevorzugt befindet sich der Eingriff im seitlichen Bereich der Seitenwand. Auf diese Weise kann das Ergreifen des Seitengitters des Rollbehälters zur sicheren Steuerung des Rollbehälters erfolgen. Bevorzugt ist der Eingriff ebenfalls durch mindestens ein Befestigungsmittel öffenbar und verschließbar. Darüber hinaus ist es denkbar, dass auch der Eingriff mit einer Diebstahlsicherung abgesichert wird. Weiter ist es denkbar, dass ein Befestigungsmittel vom Schutzsystem umfasst ist, welches durch geeignete Platzierung den Eingriff öffenbar und verschließbar ausgestaltet.

In noch einer bevorzugten Weiterbildung ist das Schutzsystem aus einem leichten, flüssigkeitsabweisenden, wasserdichten, abwischbaren, waschmaschinenfesten, strahlwasserbeständigen, reißfesten, abriebfesten, schnittfesten, langlebigen, hitzebeständigen, kältebeständigen, UV-beständigen, flammhemmenden, antibakteriellen, antiviralen, antifungalen, transluzenten, transparenten und/oder lebensmittelechten Material gefertigt. Im Rahmen der Erfindung ist es erkannt worden, dass ein leichtes Material nur wenig zusätzliches Gewicht bedeutet. Insbesondere in der Transportbranche bedeutet zusätzliches Gewicht stets auch zusätzliche Kosten, insbesondere wenn das Transportgut mit einem Lastkraftwagen, Flugzeug oder Schiff transportiert werden soll, bei dem sich der Kraftstoffverbrauch mit dem Transportgewicht erhöht. Aber auch bei der Verstauung ist ein leichtes Material von Vorteil, da es den das Schutzsystem verstauenden Mitarbeiter nicht über die Maßen belastet. Ist das Material flüssigkeitsabweisend und/oder wasserdicht, bietet es einen optimalen Schutz gegen Witterung. Da aber auch andere Ereignisse eine Verschmutzung des Schutzsystems herbeiführen können, ist es vorteilhaft, wenn das Schutzsystem gereinigt werden kann. Dies ist insbesondere dann der Fall, wenn das Material waschmaschinenfest, strahlwasserbeständig und/oder abwischbar ist. Unter diesen Umständen kann eine Reinigung mittels eines Lappens, einer Waschmaschine und/oder eines Dampfstrahlgeräts erfolgen. Die Verwendung eines reißfesten, abriebfesten, schnittfesten und/oder langlebigen Materials ermöglicht eine lange Benutzungsdauer des Schutzsystems. Im Rahmen der Erfindung ist es erkannt worden, dass Transportgüter extremen äußeren Umständen ausgesetzt werden können. Insbesondere die Lagerung bei Hitze, die sich beispielsweise in einem Lastkraftwagen bei hoher Außentemperatur entwickeln kann, oder auch Kälte, wie beispielweise in einem Kühllager, sind denkbar. Auch ist es erkannt worden, dass die Rollbehälter teilweise im Freien abgestellt werden, wo sie direktem UV-Licht ausgesetzt sind. Daher ist es von Vorteil, wenn das Material hitzebeständig, kältebeständig und/oder UV-beständig ist. Um das Transportgut und die das Transportgut handhabenden Personen vor Feuer zu schützen, ist es ebenfalls gewünscht, dass das Material flammhemmend ist. Da es denkbar ist, dass das Transportgut ein Lebensmittel und/oder ein Gegenstand, welcher für den Kontakt mit Lebensmitteln bestimmt ist, ist, wird es bevorzugt, dass das Material antibakteriell, antiviral und/oder antifungal ausgeführt ist. Es ist allgemein bekannt, dass Bakterien, Viren und/oder Pilze durch Lebensmittel und Lebensmittelreste in ihrem Wachstum gefördert werden und gleichzeitig gesundheitliche Beeinträchtigungen beim Menschen hervorrufen können. Dabei ist es erkannt worden, dass es zum optimalen Schutz der Lebensmittel und der zum Kontakt mit Lebensmitteln bestimmten Gegenstände von Vorteil ist, wenn das Material des Schutzsystems ebenfalls zum Kontakt mit Lebensmitteln geeignet ist. Dies wird mit lebensmittelechten Materialien ermöglicht. Außerdem ist es vorteilhaft, wenn das Material transluzent und/oder transparent ist, da in diesem Fall von außen ersichtlich ist, welches Transportgut sich auf dem Rollbehälter befindet. Der Begriff "lebensmittelecht" betrifft solche Materialien, welche die relevanten rechtlichen Anforderungen für Lebensmittelkontaktmaterialien einhalten.

In noch einer Weiterbildung ist es denkbar, dass das Schutzsystem aus einem einschichtigen oder mehrschichtigen Gewebe oder einer einschichtigen oder mehrschichtigen Folie ist. Im Rahmen der Erfindung ist es erkannt worden, dass ein Gewebe oder eine Folie eine, mehrere oder alle der oben genannten, gewünschten Eigenschaften erfüllt. Besonders bevorzugt handelt es sich bei dem Material um ein Polyethylen-Bändchengewebe. Polyethylen-Bändchengewebe ist leicht, faltbar, knickbar, wasserdicht, abwischbar, strahlwasserbeständig, reißfest, abriebfest, langlebig, hitzebeständig, kältebeständig und transluzent. Alternativ ist es denkbar, dass das Material aus einem nachwachsenden Rohstoff, wie Baumwolle, oder einem biobasierten Kunststoff und/oder biologisch abbaubar ist. Solche Materialien ermöglichen die besonders umweltfreundliche Herstellung und/oder Entsorgung.

In noch einer Weiterbildung ist es denkbar, dass das Schutzsystem zusammenlegbar ist. Im Rahmen der Erfindung ist es erkannt worden, dass ein zusammenlegbares Schutzsystem leicht zu transportieren und zu verstauen ist. Dabei ist es beliebig, ob das Schutzsystem aufgrund des verwendeten Materials oder des Aufbaus zusammenlegbar ist. Ein Material ist insbesondere dann zusammenlegbar, wenn es faltbar und/oder knickbar ist. Geeignete Materialien sind dem Fachmann bekannt. Ebenfalls sind dem Fachmann Gestaltungsmöglichkeiten zur Sicherstellung der Zusammenlegbarkeit bekannt. Beispielsweise sind an dieser Stelle Scharniere oder das Einfügen von Nahtstellen, an welchen Streifen mit elastischen Materialien eingefügt sind, denkbar.

Grundsätzlich ist es beliebig, was mit dem Rollbehälter transportiert und durch das Schutzsystem geschützt wird. Dabei ist es denkbar, dass das Transportgut eine Ware, eine Kiste, ein Karton, ein Paket, ein Korb, eine Tüte, eine Schale, eine Pflanze, ein Sack, ein Behältnis, ein Lebensmittel, ein Gut des täglichen Bedarfs, ein industrielles Gut, ein Zwischenprodukt, ein Konsumgut, ein Medikament und/oder ein Koffer ist. Außerdem ist es denkbar, dass zwei, drei, vier, fünf, sechs, sieben, acht, neun, zehn oder mehr gleichartige oder verschiedenartige Transportgüter in einem Rollbehälter transportiert und durch das Schutzsystem geschützt sind.

Es wird davon ausgegangen, dass die Definitionen und Ausführungen der oben genannten Begriffe für alle in dieser Beschreibung und im Folgenden beschriebenen Aspekte gelten, sofern nichts anderes angegeben ist. Weitere Einzelheiten, Merkmale und Vorteile der Erfindung ergeben sich aus der nachfolgenden Beschreibung der bevorzugten Ausführungsbeispiele in Verbindung mit den Unteransprüchen. Die Erfindung ist nicht auf die Ausführungsbeispiele beschränkt, sondern wird durch die Merkmale der Ansprüche definiert. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

Im Einzelnen zeigen:
- **Fig. 1**: eine Draufsicht eines Teils eines erfindungsgemäßen Schutzsystems;
- **Fig. 2**: eine Bildfolge zur Illustration der Montage einer Ausführungsform eines erfindungsgemäßen Schutzsystems.

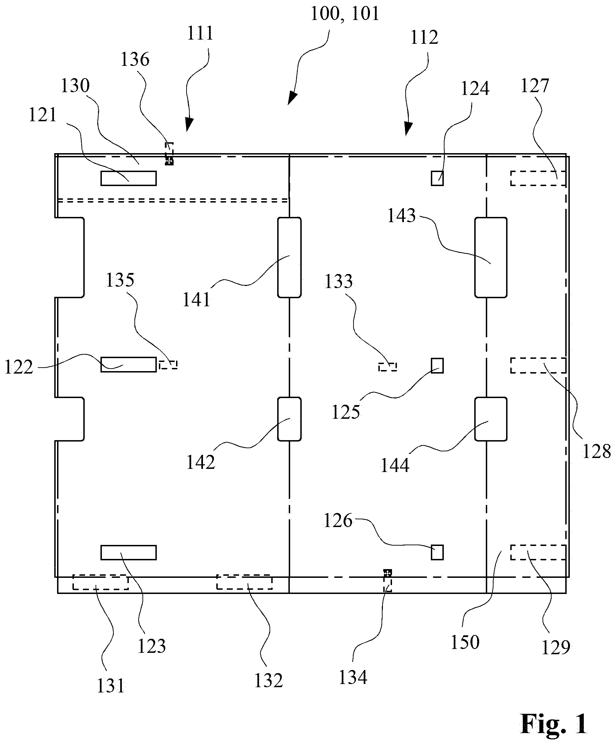

**Fig. 1** zeigt eine Draufsicht eines Teils eines erfindungsgemäßen Schutzsystems 100. In diesem Ausführungsbeispiel ist die Schutzabdeckung 100 zweiteilig ausgeführt. Der erste Teil 101 und der zweite Teil 102 sind dabei identisch ausgestaltet. Es ist ebenfalls denkbar, dass der erste und/oder der zweite Teil 101, 102 jeweils dazu geeignet sind, eine, zwei, drei, vier, fünf oder mehr Seitenflächen eines nicht dargestellten Rollbehälters abzudecken. Außerdem ist es denkbar, dass die einzelnen Teile des mehrteiligen Schutzsystems 100 unterschiedlich ausgestaltet sind und dabei eine gleiche oder unterschiedliche Anzahl an Seitenflächen des nicht dargestellten Rollbehälters abdecken können.

Wie gut in Fig. 1 zu erkennen ist, weisen der erste und der zweite Teil 101, 102 des Schutzsystems 100 in diesem Ausführungsbeispiel jeweils eine erste Seitenwand 111 und eine zweite Seitenwand 112 auf. Die erste Seitenwand 111 umfasst ein erstes Befestigungsmittel 130, welches zur Montage formschlüssig über ein nicht dargestelltes Seitengitter des nicht dargestellten Rollbehälters gezogen werden kann. Das erste Befestigungsmittel 130 befindet sich auf der der Zeichnungsebene abgewandten Seite des ersten und des zweiten Teils 101, 102. Dieser Umstand wird durch die gestrichelte Linie angedeutet. Das erste Befestigungsmittel 130 wird gebildet, indem bei der Herstellung des Schutzsystems 100 an der oberen Kante der ersten Seite 111 zunächst eine Lasche angeordnet ist, welche anschließend nach hinten geklappt wird und mit geeigneten Mitteln seitlich mit dem ersten Teil 111 verbunden wird. Geeignete Verbindungen sind beispielsweise Nähen, Kleben oder Reibschweißen. Andere Herstellungsmethoden des ersten Befestigungsmittels 130 sind grundsätzlich ebenfalls denkbar und dem Fachmann bekannt. Außerdem umfassen der erste und der zweite Teil 101, 102 ein zweites und ein drittes Befestigungsmittel 131, 132, welches an der unteren Kante der ersten Seitenwand 111 linksseitig bzw. rechtsseitig angeordnet ist. Dabei sind das zweite und das dritte Befestigungsmittel 131, 132, wie gut erkennbar ist, von der unteren Kante und der Seitenkante beabstandet. Es ist ebenfalls denkbar, das zweite und das dritte Befestigungsmittel 131, 132 direkt an der Kante zu platzieren. In diesem Ausführungsbeispiel sind das zweite und das dritte Befestigungsmittel 131, 132 als ein Magnet ausgestaltet. Des Weiteren umfasst die erste Seitenwand 111 ein viertes, fünftes und sechstes Befestigungsmittel 121, 122, 123, welche in diesem Ausführungsbeispiel als Klettverschluss ausgeführt sind. Das vierte Befestigungsmittel 121 befindet sich an der oberen Kante linksseitig, das fünfte Befestigungsmittel 122 befindet sich mittig an der linken Kante, und das sechste Befestigungsmittel 123 befindet sich an der unteren Kante linksseitig oberhalb des zweiten Befestigungsmittels 131. Das vierte, fünfte und sechste Befestigungsmittel 121, 122, 123 sind dabei jeweils von den Kanten beabstandet. Es ist jedoch grundsätzlich auch denkbar, dass diese direkt an den Kanten platziert werden. Außerdem ist es ebenfalls denkbar, dass das zweite und das sechste Befestigungsmittel 131, 123 teilweise oder vollständig deckend angeordnet sind. Dies liegt in ihrer unterschiedlichen Wirkungsweise und Ausrichtung begründet. Das zweite Befestigungsmittel 131 ist als Magnet ausgestaltet und ist mit einem nicht dargestellten Seitengitter verbindbar. Dieses befindet sich bei erfindungsgemäßem Gebrauch auf der der Betrachtungsebene abgewandten Seite. Das sechste Befestigungsmittel 123 hingegen ist auf der der Betrachtungsebene zugewandten Seite angeordnet, welche gattungsgemäß ebenfalls die Wirkrichtung des sechsten Befestigungsmittels 123 darstellt. Das vierte, fünfte und sechste Befestigungsmittel 121, 122, 123 sind rechteckig ausgestaltet, wobei die längere Mittelsenkrechte der rechteckigen Ausgestaltung parallel zur oberen bzw. unteren Kante der ersten Seitenwand 111 ausgerichtet ist. Diese Ausrichtung und die längliche Ausgestaltung haben den Vorteil, dass dadurch der Umfang des Schutzsystems 100 vergrößert bzw. reduziert werden kann und so optimal an das Transportgut anpassbar ist. Grundsätzlich sind auch andere Ausgestaltungen des vierten, fünften und sechsten Befestigungsmittels 121, 122, 123 denkbar.

Weiterhin ist es der Fig. 1 gut zu entnehmen, dass das Schutzsystem 100 außerdem ein siebtes, achtes und neuntes Befestigungsmittel 124, 125, 126 umfasst. Das siebte, achte und neunte Befestigungsmittel 124, 125, 126 sind in diesem Ausführungsbeispiel ebenfalls als Klettverschluss ausgeführt. Das siebte Befestigungsmittel 124 ist an der oberen Kante der zweiten Seitenwand 124 rechtsseitig angeordnet. Das achte Befestigungsmittel 125 ist mittig an der rechten Kante der zweiten Seitenwand 112 angeordnet. Das neunte Befestigungsmittel 126 ist an der unteren Kante der zweiten Seitenwand 112 rechtsseitig angeordnet. Das siebte, achte und neunte Befestigungsmittel 124, 125, 126 sind von den Kanten beabstandet. Es ist jedoch auch denkbar, dass diese direkt an der Kante platziert werden. Die Aufgabe des siebten, achten und neunten Befestigungsmittels 124, 125, 126 ist der Erhalt eines zusammengelegten Zustands. Dazu wird die zweite Seitenwand 112 auf die erste Seitenwand 111 gefaltet und das siebte Befestigungsmittel 124 mit dem vierten Befestigungsmittel 121, das achte Befestigungsmittel 125 mit dem fünften Befestigungsmittel 122 und das neunte Befestigungsmittel 126 mit dem sechsten Befestigungsmittel 123 verbunden. Aufgrund ihrer Aufgabe ist es möglich, das siebte, achte und neunte Befestigungsmittel 124, 125, 126 deutlich schmaler auszuführen als das dritte, vierte und fünfte Befestigungsmittel 121, 122, 123.

Zudem ist es der Fig. 1 zu entnehmen, dass auf der Kante zwischen der ersten Seitenwand 111 und der zweiten Seitenwand 112 ein erster und ein zweiter Eingriff 141, 142 angeordnet sind. Die Anordnung an der Kante dient der Ermöglichung des Ergreifens eines nicht dargestellten Seitengitters. Grundsätzlich ist es jedoch denkbar, ein, zwei, drei, vier oder mehr Eingriffe auf der ersten Seitenwand 111 und/oder der zweiten Seitenwand 112 zusätzlich oder anstelle des ersten und zweiten Eingriffs 141, 142 anzuordnen. Diese Eingriffe können beispielsweise genutzt werden, um Transportgut vom Rollbehälter zu entnehmen, ohne das Schutzsystem 100 demontieren zu müssen. Zwischen der zweiten Seitenwand 112 und einer Lasche 150 ist der dritte und der vierte Eingriff 143, 144 angeordnet, welche auf dieselbe Weise wie der erste und der zweite Eingriff 141, 142 das Ergreifen eines nicht dargestellten zweiten Seitengitters ermöglichen.

An der rechten Kante der zweiten Seitenwand 112 ist über die gesamte Länge des Schutzsystems 100 die Lasche 150 angeordnet, wie ebenfalls in der Fig. 1 gezeigt. Auf der Lasche 150 sind ein zehntes, ein elftes und ein zwölftes Befestigungsmittel 127, 128, 129 angeordnet. Diese sind ebenfalls als Klettverschluss ausgeführt. Das zehnte Befestigungsmittel 127 ist an der oberen Kante, das elfte Befestigungsmittel 128 ist mittig und das zwölfte Befestigungsmittel 129 ist an der unteren Kante der Lasche 150 angeordnet. Zur Montage des Schutzsystems wird das zehnte Befestigungsmittel 127 des ersten Teils 101 mit dem vierten Befestigungsmittel 121 des zweiten Teils 102 in Verbindung gebracht. Gleichzeitig wird das zehnte Befestigungsmittel 127 des zweiten Teils 102 mit dem vierten Befestigungsmittel 121 des ersten Teils 101 in Verbindung gebracht. Auf dieselbe Weise werden die fünften Befestigungsmittel 122 mit den elften Befestigungsmitteln 128 und die sechsten Befestigungsmittel 123 mit den zwölften Befestigungsmitteln 129 des ersten und zweiten Teils 101, 102 in Verbindung gebracht. Der erste und der zweite Teil 101, 102 bilden auf diese Weise einen vollständig umlaufenden Schutz. Je nachdem an welcher Stelle das zehnte, elfte und ein zwölftes Befestigungsmittel 127, 128, 129 auf dem vierten, fünften beziehungsweise sechsten Befestigungsmittel 121, 122, 123 platziert sind, verringert oder vergrößert sich der Umfang des Schutzsystems 100.

Außerdem umfasst das Schutzsystem 100 in dem Ausführungsbeispiel gemäß Fig. 1 ein dreizehntes, vierzehntes, fünfzehntes und sechzehntes Befestigungsmittel 133, 134, 125, 136. Das dreizehnte, vierzehnte, fünfzehnte und sechzehnte Befestigungsmittel 133, 134, 135, 136 sind ebenfalls als Klettverschluss ausgeführt. Mit Hilfe des dreizehnten, vierzehnten, fünfzehnten und sechzehnten Befestigungsmittels 133, 134, 135, 136 kann das Schutzsystem 100 in einem zusammengefalteten Zustand gehalten werden und das Packungsmaß bei Nichtgebrauch deutlich verringert werden. Durch die Platzierung des fünfzehnten und des sechzehnten Befestigungsmittels 135, 136 sind das Zusammenlegen und die Fixierung der Zusammenlegung an dem nicht dargestellten Rollbehälter möglich, da das erste Befestigungsmittel 131 weiterhin mit dem Rollbehälter verbunden sein kann. Außerdem können das dreizehnte, vierzehnte, fünfzehnte und sechzehnte Befestigungsmittel 133, 134, 135, 136 in einer anderen Ausführungsform einzeln, paarweise oder gleichzeitig umfasst sein. Die Faltung und die Fixierung dieser durch das dreizehnte, vierzehnte, fünfzehnte und sechzehnte Befestigungsmittel 133, 134, 135, 136 ermöglichen ebenfalls den komfortablen Eingriff in das Schutzsystem 100. Das dreizehnte Befestigungsmittel 133 ist an der unteren Kante der zweiten Seitenwand 112 mittig angeordnet. Das vierzehnte Befestigungsmittel 134 ist mittig auf der zweiten Seitenwand 112 angeordnet. Das fünfzehnte Befestigungsmittel 135 ist mittig auf der ersten Seitenwand 111 angeordnet und das sechzehnte Befestigungsmittel 136 ist mittig an der oberen Kante der ersten Seitenwand 111 angeordnet. Bei der Anordnung des fünfzehnten und sechzehnten Befestigungsmittels 135, 136 ist es erfindungsgemäß vorgesehen, dass der erste und der zweite Teil 101, 102 des Schutzsystems 100, nachdem die zweite Seitenwand 112 auf die erste Seitenwand 111 geklappt worden ist, abermals zweifach entlang der Mittelachse, welche parallel zur oberen bzw. unteren Kante des Schutzsystems 100 verläuft, gefaltet und anschließend fixiert werden. Grundsätzlich sind jedoch auch andere Anordnungen denkbar, welche andere Falt-, Roll- und/oder Rafftechniken unterstützen.

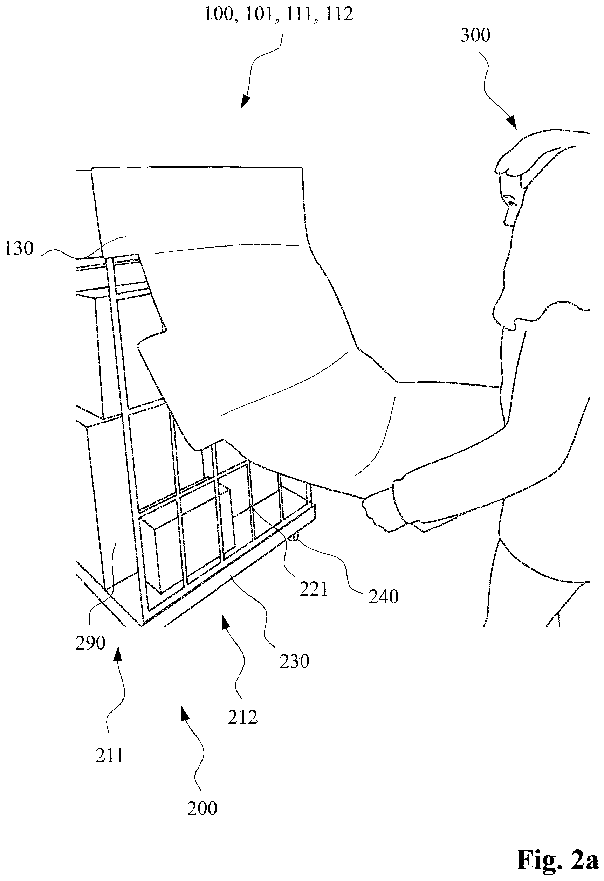

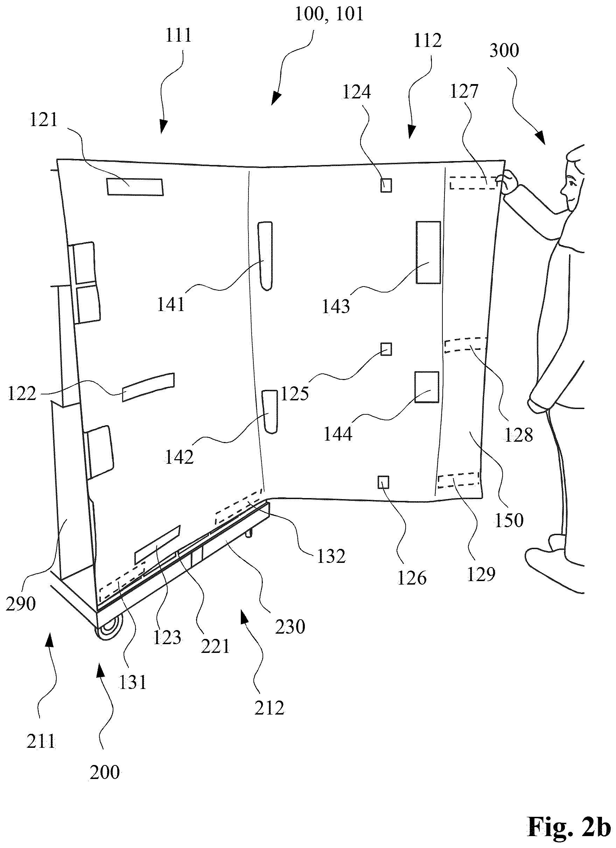

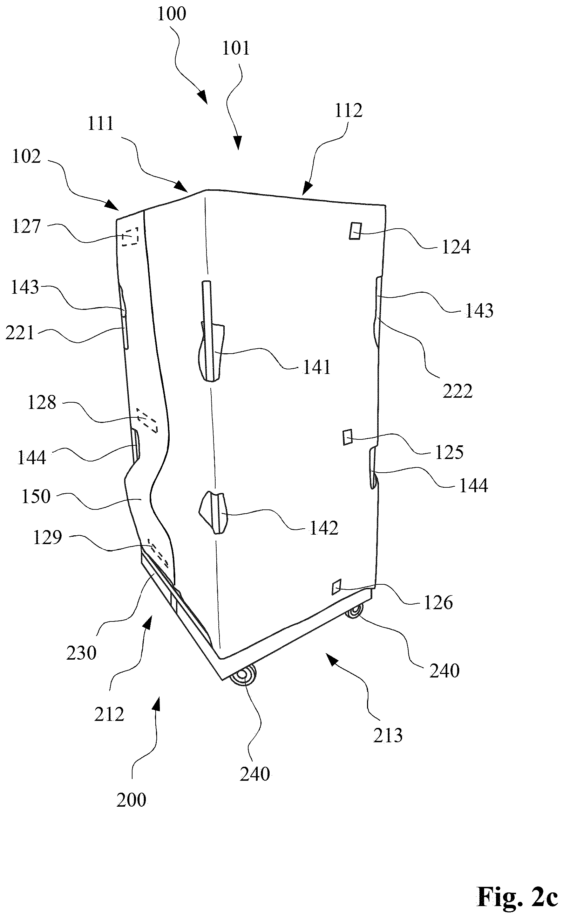

Die **Fign. 2a****,** **2b** und **2c** zeigen die Montage einer weiteren Ausführungsform eines erfindungsgemäßen Schutzsystems 100 an einem Rollbehälter 200. In dieser Ausführungsform ist das Schutzsystem 100 zweiteilig ausgeführt, wobei beide Teile 101, 102 des Schutzsystems 100 identisch ausgestaltet sind. Die beiden Teile 101, 102 bedecken jeweils zwei Seitenflächen 211, 212, 213. In der Figurenfolge der Fign. 2a, 2b und 2c ist die Montage des ersten Teils 101 des Schutzsystems 100 gezeigt. Der zweite Teil 102 des Schutzsystems 100 wird auf identische Weise am Rollbehälter 200 an den anderen, vom ersten Teil 101 nicht bedeckten Seitenflächen 211, 212, 213 montiert. Durch die identische Ausgestaltung des ersten und des zweiten Teiles 101, 102 weist der zweite Teil 102 ebenfalls alle im Folgenden beschriebenen Merkmale des ersten Teils 101 auf.

In der **Fig. 2a** ist der erste Teil 101 des Schutzsystems 100 mittels eines ersten Befestigungsmittels 130 bereits mit dem Rollbehälter 200 lösbar verbunden. Der erste Teil 101 umfasst in dieser Ausführungsform eine erste und eine zweite Seitenwand 111, 112. Dabei ist die zweite Seitenwand 112 auf die erste Seitenwand 111 gelegt. Ein Bediener 300 hält den ersten Teil 101 im unteren Bereich der seitlichen Kanten der ersten und der zweiten Seitenwand 111, 112 in der Hand. Der Rollbehälter 200 umfasst in diesem Ausführungsbeispiel vier Seitenflächen 211, 212, 213 wobei die dritte und die vierte Seitenfläche nicht abgebildet sind. Die erste Seitenfläche 211 ist offen, so dass ein Transportgut 290 auf dem Rollbehälter 200 platziert werden kann. Die zweite Seitenfläche 212 ist mit einem ersten Seitengitter 221 begrenzt. Das erste Seitengitter 221 verhindert einerseits das Herabfallen des Transportguts 290, vorausgesetzt es ist in seinen Abmessungen größer als die Maschen des ersten Seitengitters 221, und ermöglicht andererseits die Verschiebung des Rollbehälters 200. Damit die Verschiebung des Rollbehälters 200 auf einfache Weise ermöglicht ist, umfasst der Rollbehälter 200 vier Räder 240. Die Räder 240 und das erste Seitengitter 221 sind auf einer Bodenplatte 230 montiert, auf welcher auch das Transportgut 290 platziert ist. Das erste Befestigungsmittel 130 umschließt das erste Seitengitter 221 formschlüssig an der oberen Kante. Auf diese Weise bleibt der erste Teil 101 auch dann mit dem Rollbehälter 200 verbunden, wenn der Bediener 300 den ersten Teil 101 loslässt. Es ist also möglich, das Schutzsystem 100 als Einzelperson und mit Unterbrechung des Vorgangs an dem Rollbehälter 200 zu montieren.

**Fig. 2b** zeigt den nächsten Schritt der Montage, bei welchem der erste Teil 101 durch den Bediener 300 aufgefaltet wird. Der Bediener 300 hat das Schutzsystem an einer Lasche 150 ergriffen, um die zweite Seitenwand 112 von der ersten Seitenwand 111 zu klappen. Der Klappvorgang ist abgeschlossen, wenn die zweite Seitenwand 112 um einen 270°-Winkel um die die erste und die zweite Seitenwand 111, 112 verbindende Achse gedreht ist und die dritte, nicht abgebildete Seitenfläche des Rollbehälters 200 bedeckt. Die erste Seitenwand 111 bedeckt die zweite Seitenfläche 212 und das erste Seitengitter 221 des Rollbehälters 200. Das Schutzsystem 100 wird dabei durch ein zweites und ein drittes Befestigungsmittel 131, 132 im direkten Kontakt mit dem ersten Seitengitter 221 gehalten, welche an der unteren Kante der ersten Seitenwand 111 angebracht sind. Das zweite und das dritte Befestigungsmittel 131, 132 sind bei diesem Ausführungsbeispiel als Magnete ausgeführt, welche mit Hilfe ihres magnetischen Felds eine Anziehungskraft auf das metallene erste Seitengitter 221 ausüben. Sie erleichtern die Montage des Schutzsystems 100 und sorgen für einen besseren Schutz vor Witterung. Das zweite und das dritte Befestigungsmittel 131, 132 sind auf der der Betrachtungsebene abgewandten Seite der ersten Seitenwand 111 angeordnet, was durch die gestrichelten Linie angedeutet wird. An der ersten Seitenwand 111 sind ebenfalls ein viertes, fünftes und sechstes Befestigungsmittel 121, 122, 123 und an der zweiten Seitenwand 112 ein siebtes, achtes und neuntes Befestigungsmittel 124, 125, 126 angeordnet. Zusätzlich umfasst die Lasche 150 ein zehntes, elftes und zwölftes Befestigungsmittel 127, 128, 129, welche auf der der Betrachtungsebene abgewandten Seite der Lasche 150 angeordnet sind. Dieser Umstand ist durch die gestrichelte Linie angedeutet. Das vierte, fünfte, sechste, siebte, achte, neunte, zehnte, elfte und zwölfte Befestigungsmittel 121, 122, 123, 124, 125, 126, 127, 128, 129 sind als Klettverschluss ausgestaltet. Das vierte, fünfte und sechste Befestigungsmittel 121, 122, 123 erfüllen bei dieser Ausführung eine doppelte Einsatzmöglichkeit. Die erste Einsatzmöglichkeit ist die Erleichterung des Zusammenlegens des Schutzsystems 100 am Rollbehälter 200, indem das vierte, fünfte und sechste Befestigungsmittel 121, 122, 123 in Verbindung mit dem siebten, achten und neunten Befestigungsmittel 124, 125, 126 gebracht werden. Dieser Zustand ist in der Fig. 2a gezeigt. Dadurch bleibt der zusammengelegte Zustand erhalten, und das Schutzsystem 100 kann leichter und platzsparender verstaut werden. Die zweite Einsatzmöglichkeit des vierten, fünften und sechsten Befestigungsmittels 121, 122, 123 ist die Verbindung mit dem zehnten, elften und zwölften Befestigungsmittel 127, 128, 129 des nicht abgebildeten zweiten Teils 102 des Schutzsystems 100. Das zehnte, elfte und zwölfte Befestigungsmittel 127, 128, 129 des ersten Teils 101 des Schutzsystems 100 werden auf gleiche Weise mit dem vierten, fünften und sechsten Befestigungsmittel 121, 122, 123 des nicht abgebildeten zweiten Teils 102 des Schutzsystems 100 in Verbindung gebracht. Die zweite Seitenfläche 212 weist außerdem noch vier Eingriffe 141, 142, 143, 144 auf. Im montierten Zustand bleibt so weiterhin das Umschließen des ersten Seitengitters 121 und eines nicht dargestellten zweiten Seitengitters, welches sich auf der nicht dargestellten vierten Seitenfläche des Rollbehälters 200 befindet, mit der Hand möglich, so dass der Rollbehälter 200 sicher manövriert werden kann.

**Fig. 2c** zeigt den Rollbehälter 200 um 90° verdreht zur **Fig. 2b****,** so dass die zweite Seitenfläche 212 und die dritte Seitenfläche 213 zu sehen sind. Die erste Seitenwand 111 des ersten Teils 101 bedeckt die zweite Seitenfläche 212 mit dem ersten Seitengitter 221, während die zweite Seitenwand 112 die dritte Seitenfläche 213 bedeckt. Außerdem ist ebenfalls die Lasche 150 des zweiten Teils 102 erkennbar. Das zehnte, elfte und zwölfte Befestigungsmittel 127, 128, 129 des zweiten Teils 102 sind mit dem nicht abgebildeten vierten, fünften und sechsten Befestigungsmittel 121, 122, 123 des ersten Teils 101 verbunden. Auf diese Weise ist das Schutzsystem 100 geschlossen worden. Es ist gut erkennbar, dass die Lasche 150 des zweiten Teils 101 überlappend über die erste Seitenwand 111 des ersten Teils 102 gelegt ist. Es ist auch leicht vorstellbar, dass, falls ein sperriges Transportgut 290 zumindest teilweise über die Bodenplatten 230 hinausragt, die Überlappung zwischen Lasche 150 des zweiten Teils 102 und erster Seitenwand 111 des ersten Teils 102 verringert werden kann. Auf diese Weise vergrößert sich der Umfang des Schutzsystems 100, und das sperrige Transportgut 290 ist ebenfalls vollständig bedeckt. Durch den ersten und den zweiten Eingriff 141, 142 des ersten Teils 101 und durch den dritten oder den vierten Eingriff 143, 144 des zweiten Teils 102 ist das Umgreifen des ersten Seitengitters 221 möglich. Außerdem ist durch den dritten und den vierten Eingriff 143, 144 des ersten Teils 101 das Umgreifen des zweiten Seitengitters 222 ermöglicht.

Wie leicht in den Fign. 2a, 2b und 2c erkannt werden kann, verhindert das Schutzsystem 100 einen unberechtigtem Eingriff, ein Herausfallen und/oder einen Diebstahl des nicht abgebildeten Transportguts und schützt dieses zuverlässig vor Witterung.

## Patentansprüche

1. Schutzsystem (100) und Rollbehälter (200) zum Schutz von Transportgut (290) auf dem Rollbehälter (200), wobei das Schutzsystem (100) mindestens eine Seitenwand (111, 112) und der Rollbehälter (200) mindestens eine Seitenfläche (211, 212, 213) umfasst, die mindestens eine Seitenwand (111, 112) teilweise oder vollständig bedeckend für die mindestens eine Seitenfläche (211, 212, 213) ist, und wobei das Schutzsystem (100) mindestens ein Befestigungsmittel (131, 132) umfasst,
wobei das Schutzsystem (100) über das Befestigungsmittel (131, 132) lösbar mit dem Rollbehälter (200) verbindbar ist und das Schutzsystem (100) aus einem nachgiebigen Material ist, wobei die mindestens eine Seitenwand (111, 112) eine untere Kante umfasst,
**dadurch gekennzeichnet,**
**dass** das Befestigungsmittel (131, 132) ein im Bereich der unteren Kante angeordneter Magnet ist.

2. Schutzsystem (100) und Rollbehälter (200) nach Anspruch 1,
**dadurch gekennzeichnet,**
**dass** das Schutzsystem (100) mindestens ein weiteres Befestigungsmittel (121, 122, 123, 124, 125, 126, 127, 128, 129, 130, 133, 134, 135, 136) umfasst, wobei das Schutzsystem (100) über das weitere Befestigungsmittel (121, 122, 123, 124, 125, 126, 127, 128, 129, 130, 133, 134, 135, 136) mit dem Rollbehälter (200) lösbar oder unlösbar verbindbar ist, wobei die mindestens eine Seitenwand (111, 112) weiterhin eine Außenseite, eine Innenseite, eine obere Kante und/oder mindestens eine seitliche Kante umfasst, wobei das weitere Befestigungsmittel (121, 122, 123, 124, 125, 126, 127, 128, 129, 130, 133, 134, 135, 136) ein Klettverschluss, ein Band, ein Magnet, ein Formschlussteil, eine Schnalle, ein Knopf, ein Reißverschluss, eine Reibschweißnaht, eine Klebenaht und/oder eine Niete ist und/oder das weitere Befestigungsmittel (121, 122, 123, 124, 125, 126, 127, 128, 129, 130, 133, 134, 135, 136) im Bereich der Außenseite, der Innenseite, der oberen Kante, der unteren Kante und/oder der mindestens einen seitlichen Kante angeordnet ist.

3. Schutzsystem (100) und Rollbehälter (200) nach einem der Ansprüche 1 oder 2,
**dadurch gekennzeichnet,**
**dass** das Schutzsystem (100) zwei, drei oder vier Seitenwände (111, 112) umfasst.

4. Schutzsystem (100) und Rollbehälter (200) nach einem der Ansprüche 1 bis 3,
**dadurch gekennzeichnet,**
**dass** das Schutzsystem (100) ein Dach umfasst.

5. Schutzsystem (100) und Rollbehälter (200) nach einem der Ansprüche 1 bis 4,
**dadurch gekennzeichnet,**
**dass** das Schutzsystem (100) mindestens eine Lasche (150) umfasst.

6. Schutzsystem (100) und Rollbehälter (200) nach einem der Ansprüche 1 bis 5,
**dadurch gekennzeichnet,**
**dass** das Schutzsystem (100) einteilig oder mehrteilig ausgebildet ist.

7. Schutzsystem (100) und Rollbehälter (200) nach einem der Ansprüche 1 bis 6,
**dadurch gekennzeichnet,**
**dass** zumindest die mindestens eine Seitenwand (111, 112) teilweise oder vollständig öffenbar und verschließbar ist.

8. Schutzsystem (100) und Rollbehälter (200) nach einem der Ansprüche 1 bis 7,
**dadurch gekennzeichnet,**
**dass** das Schutzsystem (100) eine Diebstahlsicherung umfasst.

9. Schutzsystem (100) und Rollbehälter (200) nach einem der Ansprüche 1 bis 8,
**dadurch gekennzeichnet,**
**dass** das Schutzsystem (100) eine Codierung umfasst.

10. Schutzsystem (100) und Rollbehälter (200) nach einem der Ansprüche 1 bis 9,
**dadurch gekennzeichnet,**
**dass** das Schutzsystem (100) mindestens einen Eingriff (141, 142, 143, 144) umfasst.

11. Schutzsystem (100) und Rollbehälter (200) nach einem der Ansprüche 1 bis 10,
**dadurch gekennzeichnet,**
**dass** das Schutzsystem (100) aus einem leichten, faltbaren, knickbaren, flexiblen, flüssigkeitsabweisenden, wasserdichten, abwischbaren, waschmaschinenfesten, strahlwasserbeständigen, reißfesten, abriebfesten, schnittfesten, langlebigen, hitzebeständigen, kältebeständigen, UV-beständigen, flammhemmenden, antibakteriellen, antiviralen, antifungalen, lebensmittelechten, transluzenten und/oder transparenten Material ist.

12. Schutzsystem (100) und Rollbehälter (200) nach einem der Ansprüche 1 bis 11,
**dadurch gekennzeichnet,**
**dass** das Schutzsystem (100) aus einem Gewebe oder einer Folie ist.

13. Schutzsystem (100) und Rollbehälter (200) nach einem der Ansprüche 1 bis 12,
**dadurch gekennzeichnet,**
**dass** das Schutzsystem (100) zusammenlegbar ist.

14. Schutzsystem (100) und Rollbehälter (200) nach einem der Ansprüche 1 bis 13,
**dadurch gekennzeichnet,**
**dass** das Transportgut (290) eine Ware, eine Kiste, ein Karton, ein Paket, ein Korb, eine Tüte, eine Schale, eine Pflanze, ein Sack, ein Behältnis, ein Lebensmittel, ein Gut des täglichen Bedarfs, ein industrielles Gut, ein Zwischenprodukt, ein Konsumgut, ein Medikament und/oder ein Koffer ist.

## Claims

1. A protection system (100) and a roll container (200) for protecting transported goods (290) on the roll container (200), the protection system (100) comprising at least one lateral wall (111, 112), and the roll container (200) comprising at least one lateral surface (211, 212, 213), the at least one lateral wall (111, 112) partially or fully covering the at least one lateral surface (211, 212, 213), and the protection system (100) comprising at least one fastening means (131, 132),
the protection system (100) being reversibly connectable to the roll container (200) via the fastening means (131, 132), and the protection system (100) being made of a flexible material, the at least one lateral wall (111, 112) comprising a lower edge,
**characterized in that**
the fastening means (131, 132) is a magnet disposed in the area of the lower edge.

2. The protection system (100) and the roll container (200) according to claim 1,
**characterized in that**
the protection system (100) comprises at least one further fastening means (121, 122, 123, 124, 125, 126, 127, 128, 129, 130, 133, 134, 135, 136), the protection system (100) being reversibly or irreversibly connectable to the roll container (200) via the further fastening means (121, 122, 123, 124, 125, 126, 127, 128, 129, 130, 133, 134, 135, 136), the at least one lateral wall (111, 112) further comprising an outer side, an inner side, an upper edge and/or at least one lateral edge, the further fastening means (121, 122, 123, 124, 125, 126, 127, 128, 129, 130, 133, 134, 135, 136) being a hook-and-loop fastener, a belt, a magnet, a form-fitting part, a buckle, a button, a zipper, a friction-welded seam, an adhesive seam and/or a rivet and/or the further fastening means (121, 122, 123, 124, 125, 126, 127, 128, 129, 130, 133, 134, 135, 136) being disposed in the area of the outer side, the inner side, the upper edge, the lower edge and/or the at least one lateral edge.

3. The protection system (100) and the roll container (200) according to any one of claims 1 or 2,
**characterized in that**
the protection system (100) comprises two, three or four lateral walls (111, 112).

4. The protection system (100) and the roll container (200) according to any one of claims 1 to 3,
**characterized in that**
the protection system (100) comprises a roof.

5. The protection system (100) and the roll container (200) according to any one of claims 1 to 4,
**characterized in that**
the protection system (100) comprises at least one flap (150).

6. The protection system (100) and the roll container (200) according to any one of claims 1 to 5,
**characterized in that**
the protection system (100) is a single part or is composed of multiple parts.

7. The protection system (100) and the roll container (200) according to any one of claims 1 to 6,
**characterized in that**
at least the at least one lateral wall (111, 112) is configured to be partially or fully opened and closed.

8. The protection system (100) and the roll container (200) according to any one of claims 1 to 7,
**characterized in that**
the protection system (100) comprises an anti-theft device.

9. The protection system (100) and the roll container (200) according to any one of claims 1 to 8,
**characterized in that**
the protection system (100) comprises a coding.

10. The protection system (100) and the roll container (200) according to any one of claims 1 to 9,
**characterized in that**
the protection system (100) comprises at least one opening (141, 142, 143, 144).

11. The protection system (100) and the roll container (200) according to any one of claims 1 to 10,
**characterized in that**
the protection system (100) is made of a light-weight, foldable, bendable, flexible, liquid-repellent, waterproof, wipeable, machine-washable, water-jet-resistant, tear-proof, abrasion-proof, cut-resistant, long-lasting, heat-resistant, cold-resistant, UV-resistant, flame-retardant, antibacterial, antiviral, antifungal, food-safe, translucent and/or transparent material.

12. The protection system (100) and the roll container (200) according to any one of claims 1 to 11,
**characterized in that**
the protection system (100) is made of a fabric or a film.

13. The protection system (100) and the roll container (200) according to any one of claims 1 to 12,
**characterized in that**
the protection system (100) is collapsible.

14. The protection system (100) and the roll container (200) according to any one of claims 1 to 13,
**characterized in that**
the transported goods (290) can be wares, boxes, cartons, parcels, baskets, bags, trays, plants, sacks, containers, food, consumer staples, industrial goods, intermediate products, consumer products, medicines, and/or suitcases.

## Revendications

1. Système de protection (100) et conteneur roulant (200) pour la protection de produits à transporter (290) sur le conteneur roulant (200), le système de protection (100) comprenant au moins une paroi latérale (111, 112) et le conteneur roulant (200) comprenant au moins une surface latérale (211, 212, 213), ladite au moins une paroi latérale (111, 112) couvrant partiellement ou entièrement ladite au moins une surface latérale (211, 212, 213) et le système de protection (100) comprenant au moins un moyen de fixation (131, 132),
le système de protection (100) étant connectable de manière détachable au conteneur roulant (200) par l'intermédiaire du moyen de fixation (131, 132) et le système de protection (100) étant fait en matériau souple, ladite au moins une paroi latérale (111, 112) comprenant un bord inférieur,
**caractérisé en ce que**
le moyen de fixation (131, 132) est un aimant disposé dans une zone du bord inférieur.

2. Système de protection (100) et conteneur roulant (200) selon la revendication 1,
**caractérisé en ce que**
le système de protection (100) comprend au moins un autre moyen de fixation (121, 122, 123, 124, 125, 126, 127, 128, 129, 130, 133, 134, 135, 136), le système de protection (100) étant connectable de manière détachable ou non détachable au conteneur roulant (200) par l'intermédiaire de l'autre moyen de fixation (121, 122, 123, 124, 125, 126, 127, 128, 129, 130, 133, 134, 135, 136), ladite au moins une paroi latérale (111, 112) comprenant en outre une face extérieure, une face intérieure, un bord supérieur et/ou au moins un bord latéral, l'autre moyen de fixation (121, 122, 123, 124, 125, 126, 127, 128, 129, 130, 133, 134, 135, 136) étant une fermeture auto-agrippante, une bande, un aimant, un composant à liaison par forme, une boucle, un bouton, une fermeture à glissière, un cordon de soudage par friction, un cordon de colle et/ou un rivet et/ou l'autre moyen de fixation (121, 122, 123, 124, 125, 126, 127, 128, 129, 130, 133, 134, 135, 136) étant disposé dans la zone de la face extérieure, de la face intérieure, du bord supérieur, du bord inférieur et/ou dudit au moins un bord latéral.

3. Système de protection (100) et conteneur roulant (200) selon l'une quelconque des revendications 1 ou 2,
**caractérisé en ce que**
le système de protection (100) comprend deux, trois ou quatre parois latérales (111, 112).

4. Système de protection (100) et conteneur roulant (200) selon l'une quelconque des revendications 1 à 3,
**caractérisé en ce que**
le système de protection (100) comprend un toit.

5. Système de protection (100) et conteneur roulant (200) selon l'une quelconque des revendications 1 à 4,
**caractérisé en ce que**
le système de protection (100) comprend au moins une languette (150).

6. Système de protection (100) et conteneur roulant (200) selon l'une quelconque des revendications 1 à 5,
**caractérisé en ce que**
le système de protection (100) est un seul composant ou il est composé par plusieurs composants.

7. Système de protection (100) et conteneur roulant (200) selon l'une quelconque des revendications 1 à 6,
**caractérisé en ce**
**qu'**au moins ladite au moins une paroi latérale (111, 112) est configurée pour être ouverte ou fermée partiellement ou entièrement.

8. Système de protection (100) et conteneur roulant (200) selon l'une quelconque des revendications 1 à 7,
**caractérisé en ce que**
le système de protection (100) comprend un dispositif antivol.

9. Système de protection (100) et conteneur roulant (200) selon l'une quelconque des revendications 1 à 8,
**caractérisé en ce que**
le système de protection (100) comprend un codage.

10. Système de protection (100) et conteneur roulant (200) selon l'une quelconque des revendications 1 à 9,
**caractérisé en ce que**
le système de protection (100) comprend au moins une ouverture (141, 142, 143, 144).

11. Système de protection (100) et conteneur roulant (200) selon l'une quelconque des revendications 1 à 10,
**caractérisé en ce que**
le système de protection (100) est fait en matériau léger, pliable, coudable, flexible, hydrofuge, imperméable à l'eau, essuyable, lavable en machine, résistant aux jets d'eau, indéchirable, résistant à l'abrasion, résistant aux coupures, durable, résistant à la chaleur, résistant au froid, résistant aux UV, ignifuge, antibactérien, antiviral, antifongique, convenable pour aliments, translucide et/ou transparent.

12. Système de protection (100) et conteneur roulant (200) selon l'une quelconque des revendications 1 à 11,
**caractérisé en ce que**
le système de protection (100) est fait en tissue ou en film.

13. Système de protection (100) et conteneur roulant (200) selon l'une quelconque des revendications 1 à 12,
**caractérisé en ce que**
le système de protection (100) est pliable à plat.

14. Système de protection (100) et conteneur roulant (200) selon l'une quelconque des revendications 1 à 13,
**caractérisé en ce que**
le produit à transporter (290) est une marchandise, une boîte, un carton, un colis, un panier, un sachet, un ravier, une plante, un sac, un récipient, une denrée alimentaire, un produit de consommation courante, un produit industriel, un produit intermédiaire, un produit de consommation, un médicament et/ou une valise.
